# EUROPEAN PATENT SPECIFICATION

(11) **EP 3 187 533 B1**
(45) Date of publication and mention of the grant of the patent: **20.02.2019**
(21) Application number: 15834900.1
(22) Date of filing: 18.08.2015
(51) Int. Cl.: C08L 23/02, C08J 5/18, C08K 5/00, C08L 69/00

(54) **POLYOLEFIN RESIN COMPOSITION, MOLDING, AND POLYOLEFIN RESIN FILM**
POLYOLEFINHARZZUSAMMENSETZUNG, FORM UND POLYOLEFINHARZFILM
COMPOSITION DE RESINE DE POLYOLEFINE, MOULAGE ET FILM DE RESINE DE POLYOLEFINE

(30) Priority: 29.08.2014 JP 2014176080
(43) Date of publication of application: 05.07.2017
(73) Proprietor: National University Corporation Kanazawa University, Ishikawa 920-1192 (JP); Sumitomo Seika Chemicals Co., Ltd., Kako-gun, Hyogo 675-0145 (JP)
(72) Inventor: NITTA, Koh-hei, Kanazawa-shi Ishikawa 920-1192 (JP); NAKAHARA, Makiko, Kanazawa-shi Ishikawa 920-1192 (JP); MAE, Miho, Kanazawa-shi Ishikawa 920-1192 (JP); NISHIOKA, Kiyoshi, Himeji-shi Hyogo 672-8076 (JP); FUJIMOTO, Nobutaka, Osaka-shi Osaka 541-0041 (JP); SUZUKI, Masahiro, Himeji-shi Hyogo 672-8076 (JP)
(74) Representative: Vossius & Partner Patentanwälte Rechtsanwälte mbB
(86) International application number: PCT/JP2015/073133
(87) International publication number: WO 2016/031626

(56) References cited:
- EP-A2- 0 428 042
- JP-A- 2009 079 174
- JP-A- 2009 079 174
- JP-A- 2010 047 702
- JP-A- 2010 209 218

## Description

### Technical Field

The present invention relates to a polyolefin-based resin composition, as well as a molded article and a polyolefin-based resin film obtained by using the polyolefin-based resin composition.

### Background Art

Polyolefin-based resins are used for various purposes, including molded articles, films, fibers, and lining. Since the performances required for some of these applications cannot be satisfied by polyolefin-based resin alone, various modifications of polyolefin-based resins have been attempted. Techniques to change the characteristics of polyolefin-based resins have long been attempted, and various methods, including copolymerization, cross-linkage of polymers, and incorporation of other components (for example, additives such as a filler, or other resins such as an elastomer) in the polymer matrix, have been generally used. Of these, methods of mixing a polyolefin-based resin with additives or other resins have widely been used since these methods enable a wide range of property control and easy addition of functions. For example, Patent Document 1 discloses a polyolefin-based resin composition ensuring superior antistatic performance that is obtained by mixing a polystyrene-based resin and an ionomer resin with polyolefin. Patent Document 2 discloses a polypropylene-based composite material that has significantly superior specific strength and that is obtained by mixing epoxy-modified polyolefin and long carbon fiber with polypropylene.

### Citation List

### Patent Documents

Patent Document 1: JP2011-162761A
Patent Document 2: JP2010-150371A

### Summary of Invention

### Technical Problem

Since the original mechanical properties cannot be maintained after the materials are yielded, in practical use, it is necessary to improve mechanical properties such as strength or extension, as well as energy required for yield breakage of the material (referred to in this specification as "resilience"). However, there have been difficulties in the improvement in resilience while also maintaining the original properties of polyolefin-based resin.

The present invention was made in view of above circumstances, and an object of the invention is to provide a polyolefin-based resin composition that ensures improved resilience while maintaining mechanical strength and stretching properties, and to provide a molded article and a polyolefin-based resin film formed of the polyolefin-based resin composition.

### Solution to Problem

The inventors of the present invention conducted extensive research and found that, by incorporating a polyalkylene carbonate resin and an ionic liquid in a polyolefin-based resin, the resilience can be improved without greatly decreasing the original mechanical properties of the polyolefin-based resin. The inventors conducted further research based on this finding and completed the present invention.

Specifically, the present invention relates to the polyolefin-based resin compositions, molded article, and polyolefin-based resin films as detailed below.
Item 1. A polyolefin-based resin composition, comprising a polyolefin-based resin, a polyalkylene carbonate resin, and an ionic liquid.
Item 2. The polyolefin-based resin composition according to Item 1, wherein the polyalkylene carbonate resin is polypropylene carbonate.
Item 3. The polyolefin-based resin composition according to Item 1 or 2, wherein the ionic liquid is a salt comprising a combination of a cation selected from the group consisting of ammonium ion, pyridinium ion, pyrrolidinium ion, pyrrolinium ion, oxazolium ion, oxazolinium ion, imidazolium ion, thiazolium ion and phosphonium ion, and an anion selected from the group consisting of halogen ions, phosphate ion, nitrate ion, sulfate ion, bisulfate ion, sulfonate ion, tosylate ion, perchlorate ion, aluminate ion, dialuminate ion, borate ion, amide ion, dicyanamide ion, succinate ion, thiocyanate ion, and carboxylate ion.
Item 4. The polyolefin-based resin composition according to any one of Items 1 to 3, wherein the polyolefin-based resin composition comprises 0.05 to 20 parts by mass of polyalkylene carbonate resin, and 0.01 to 5 parts by mass of ionic liquid, per 100 parts by mass of polyolefin-based resin.
Item 5. The polyolefin-based resin composition according to any one of Items 1 to 4, wherein the polyolefin-based resin is polypropylene or polyethylene.
Item 6. The polyolefin-based resin composition according to any one of Items 1 to 4, wherein the polyolefin-based resin is polypropylene.
Item 7. A molded article formed by molding the polyolefin-based resin composition according to any one of Items 1 to 6.
Item 8. A polyolefin-based resin film formed by molding the polyolefin-based resin composition according to any one of Items 1 to 6, wherein the polyolefin-based resin film is stretched at least in a monoaxial direction.
Item 9. The polyolefin-based resin film according to Item 8, wherein the stretching magnification when the polyolefin-based resin film is stretched in the monoaxial direction is 1.01 to 20.0.

### Advantageous Effects of Invention

The polyolefin-based resin composition of the present invention maintains the mechanical properties of the polyolefin-based resin used to obtain the composition, and also ensures improved resilience. The polyolefin-based resin composition of the present invention also has a feature that it does not easily yield. Therefore, the polyolefin-based resin composition of the present invention increases usable range of polyolefin-based resins.

Since the molded article of the present invention is obtained by molding the polyolefin-based resin composition described above, the molded article has features such that the mechanical property is maintained, the resilience is improved, and the molded article does not easily yield.

Since the polyolefin-based resin film of the present invention is obtained by molding the polyolefin-based resin composition described above, the polyolefin-based resin film has features such that the mechanical property is maintained, the resilience is improved, and the resin film does not easily yield. Further, since the polyolefin-based resin film is formed by being stretched at least in a monoaxial direction, its surface resistivity is greatly reduced and its antistatic performance is improved, and defects at the time of use, such as adhesion of dust, can thereby be reduced.

### Brief Description of Drawings

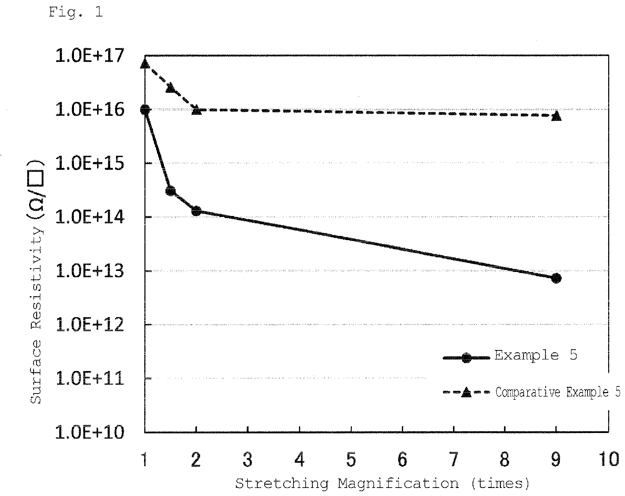

Fig. 1 is a graph showing the relationship between the stretching magnification and the surface resistivity with regard to the films obtained in Example 5 and Comparative Example 5.

### Description of Embodiments

The embodiments of the present invention are described below in detail.

### Polyolefin-Based Resin Composition

The polyolefin-based resin composition contains a polyolefin-based resin, a polyalkylene carbonate resin, and an ionic liquid.

The polyolefin-based resin is a polymer comprising monomer units derived from an olefin. Examples include polyethylene-based resins, polypropylene-based resins, ethylene/carboxylic acid alkenyl ester copolymer resins, ethylene/unsaturated carboxylic acid alkyl ester copolymer resins, polybutene-based resins, and poly(4-methyl-1-pentene)-based resins.

Examples of preferable polyethylene-based resins include polyethylene. Polyethylene is not particularly limited, and examples of usable polyethylene include low-density polyethylene, linear low-density polyethylene, medium-density polyethylene, high-density polyethylene, and ultrahigh-molecular-weight polyethylene.

Preferable examples of polypropylene-based resins include polypropylene and copolymers of propylene with one or more other olefins. Examples of preferable "one or more other olefins" as used herein include ethylene, butene, pentene, hexene, and octane. The "one or more other olefins" for use refer to a single olefin or a combination of two or more olefins. The copolymer may be a block copolymer, a random copolymer, or an alternating copolymer. More specifically, as a polypropylene-based resin, polypropylene, a propylene/ethylene copolymer, a propylene/ethylene/butene copolymer, a propylene/butene copolymer, a propylene/hexene copolymer, a propylene/octene copolymer, and the like are preferable. Polypropylene is more preferable. Polypropylene is not particularly limited, and isotactic polypropylene, syndiotactic polypropylene, and the like may be used.

Examples of "carboxylic acid alkenyl esters" of ethylene/carboxylic acid alkenyl ester copolymer resins include vinyl acetate, vinyl propionate, vinyl butyrate, isopropenyl acetate, and allyl acetate. Of these, vinyl acetate is preferable. Specifically, as an ethylene/carboxylic acid alkenyl ester copolymer resin, an ethylene/vinyl acetate copolymer is particularly preferable.

Examples of "unsaturated carboxylic acid alkyl esters" of ethylene/unsaturated carboxylic acid alkyl ester copolymer resins include methyl acrylate, ethyl acrylate, propyl acrylate, methyl methacrylate, ethyl methacrylate, and propyl methacrylate. Of these, methyl acrylate and methyl methacrylate are preferable. Specifically, as an ethylene/unsaturated carboxylic acid alkyl ester copolymer resin, an ethylene/methyl acrylate copolymer and an ethylene/methyl methacrylate copolymer are particularly preferable.

Polyolefin-based resins can be used singly or in a combination of two or more. Of polyolefin-based resins, polyethylene-based resins or polypropylene-based resins are preferably used from the standpoint of excellent compatibility with polyalkylene carbonate resins. At least one resin selected from the group consisting of polyethylene, polypropylene, and copolymers of propylene with one or more other olefins is more preferably used. Polyethylene and polypropylene are particularly preferable.

The method for producing a polyolefin-based resin is not particularly limited, and any known methods may be used. Examples of methods include methods comprising radical polymerization of an olefin using an initiator, such as a peroxide, and methods comprising polymerization of an olefin using a gas-phase technique, solution technique, or the like in the presence of a polymerization catalyst. Examples of usable polymerization catalysts include Ziegler-Natta catalysts, Phillips catalysts, and metallocene catalysts.

The molecular weight of the polyolefin-based resin is not particularly limited; for example, the mass-average molecular weight of the polyolefin-based resin is such that the lower limit is preferably 20,000, the upper limit is preferably 6,000,000, the lower limit is more preferably 50,000, the upper limit is more preferably 3,000,000, the lower limit is further preferably 100,000, and the upper limit is further preferably 1,000,000. The polyolefin-based resin having a mass-average molecular weight of 20,000 or more can further improve the mechanical strength of the resulting polyolefin-based resin composition, and thus ensures practical use. The polyolefin-based resin having a mass-average molecular weight of 6,000,000 or less makes it easier to mold the resulting polyolefin-based resin composition.

The mass-average molecular weight is determined by preparing a polyolefin-based resin dissolved in 1,2-dichlorobenzene at a concentration of 0.5%, conducting a measurement by high-performance liquid chromatography, and making a comparison with polystyrene having a known mass-average molecular weight, which has been measured under the same conditions. The measurement conditions are as follows.

Column: GPC Column
(Trade name of Tosoh Corporation: TSKgel GMH_{HR}-H HT)
Column Temperature: 140°C
Eluate: 1,2-dichlorobenzene
Flow Rate: 1 mL/min

The fluidity of a resin is indicated by the melt flow rate (MFR, unit: g/10 minutes), which is measured in accordance with, for example, the procedure described in JIS K 7210:1999. In the above polyolefin-based resin, the lower limit of MFR measured at a temperature of 230°C with a 2.16 kg load in accordance with the above procedure is preferably 0.5, and the upper limit is preferably 100. The lower limit of MFR is more preferably 1, and the upper limit of MFR is more preferably 50 (g/10 minutes). The polyolefin-based resin having an MFR of 0.5 or more provides a polyolefin-based resin composition with a fluidity not excessively low, which can therefore easily be molded by extrusion molding or blow molding in a desirable manner. The polyolefin-based resin having an MFR of 100 or less can easily be molded by injection molding or the like in a desirable manner.

The polyalkylene carbonate resin is not particularly limited. Examples include a polymer obtained by polymerization reaction of alkylene oxide and carbon dioxide (i.e., a copolymer of alkylene oxide and carbon dioxide), and a polymer obtained by ring-opening polymerization of cyclic carbonate. Of these, a polyalkylene carbonate resin obtained by copolymerization of alkylene oxide and carbon dioxide is preferably used. The polymerization reaction of alkylene oxide and carbon dioxide may be preferably performed in the presence of a metal catalyst.

Examples of alkylene oxides include ethylene oxide, propylene oxide, 1-butene oxide, 2-butene oxide, isobutylene oxide, 1-pentene oxide, 2-pentene oxide, 1-hexene oxide, 1-octene oxide, 1-decene oxide, cyclopentene oxide, cyclohexene oxide, styrene oxide, vinylcyclohexene oxide, 3-phenylpropylene oxide, 3,3,3-trifluoropropylene oxide, 3-naphthyl propylene oxide, 3-phenoxy propylene oxide, 3-naphthoxy propylene oxide, butadiene monoxide, 3-vinyloxy propylene oxide, and 3-trimethylsilyloxy propylene oxide. Of these alkylene oxides, from the standpoint of their high polymerization reactivity with carbon dioxide, ethylene oxide and propylene oxide are preferably used, and propylene oxide is more preferably used. These alkylene oxides can be used singly or in a combination of two or more.

Examples of metal catalysts include aluminum catalysts and zinc catalysts. Of these, from the standpoint of their high polymerization activity in a polymerization reaction of alkylene oxide and carbon dioxide, zinc catalysts are preferably used.

Examples of zinc catalysts include organozinc catalysts such as zinc acetate, diethylzinc, and dibutylzinc; and organozinc catalysts obtained by reacting a zinc compound with a compound such as a primary amine, a divalent phenol, a divalent aromatic carboxylic acid, an aromatic hydroxylic acid, an aliphatic dicarboxylic acid, or an aliphatic monocarboxylic acid. Of these, an organozinc catalyst obtained by reacting a zinc compound with an aliphatic dicarboxylic acid and an aliphatic monocarboxylic acid is preferable because of its high polymerization activity. Preferable examples of organozinc catalysts include dimethyl zinc, diethyl zinc, and diphenyl zinc.

The amount of the metal catalyst to be used for the polymerization reaction is such that the lower limit is preferably 0.001 parts by mass, the upper limit is preferably 20 parts by mass, the lower limit is more preferably 0.01 parts by mass, and the upper limit is more preferably 10 parts by mass, per 100 parts by mass of alkylene oxide. If the amount of the metal catalyst is 0.001 parts by mass or more, the polymerization reaction can be facilitated. Further, if the amount of the metal catalyst is 20 parts by mass or less, it is possible to obtain favorable effects that match the amount of catalyst added.

The method of the polymerization reaction between alkylene oxide and carbon dioxide in the presence of a metal catalyst is not particularly limited. Examples include a method comprising charging an autoclave with the above alkylene oxide and a metal catalyst, optionally with a reaction solvent, mixing them, and injecting in carbon dioxide with pressure to allow a reaction.

The reaction solvent for optional use in the polymerization reaction is not particularly limited, and a variety of organic solvents can be used. Specific examples include aliphatic hydrocarbon-based solvents, such as pentane, hexane, octane, decane, and cyclohexane; aromatic hydrocarbon-based solvents, such as benzene, toluene, and xylene; halogenated hydrocarbon-based solvents, such as dichloromethane, chloroform, carbon tetrachloride, 1,1-dichloroethane, 1,2-dichloroethane, ethyl chloride, trichloroethane, 1-chloropropane, 2-chloropropane, 1-chlorobutane, 2-chlorobutane, 1-chloro-2-methylpropane, chlorobenzene, and bromobenzene; ether-based solvents such as tetrahydrofuran, 1,3-dioxolan, 1,4-dioxane, or 1,2-dimethoxyethane; ester-based solvents such as ethyl acetate, or butyl acetate; ketone-based solvents such as acetone, methylethylketone, or methylisobutylketone; and carbonate-based solvents, such as dimethyl carbonate, diethyl carbonate, and propylene carbonate.

The amount of the reaction solvent is preferably 100 to 10,000 parts by mass per 100 parts by mass of an alkylene oxide, from the standpoint of achieving a smooth reaction.

The pressure of the carbon dioxide in the above polymerization reaction is not particularly limited; generally, the lower limit is preferably 0.1 MPa, the upper limit is preferably 20 MPa, the lower limit is more preferably 0.2 MPa, the upper limit is more preferably 10 MPa, the lower limit is further preferably 0.5 MPa, and the upper limit is further preferably 5 MPa.

The polymerization reaction temperature in the above polymerization reaction is not particularly limited; however, the polymerization reaction temperature is preferably such that the lower limit is preferably 30°C, the upper limit is preferably 100°C, the lower limit is more preferably 40°C, and the upper limit is more preferably 80°C. A polymerization reaction temperature of 30°C or more further facilitates the polymerization reaction. A polymerization reaction temperature of 100°C or less can decrease the likelihood of a side reaction, and further increase the yield of the polymer. The polymerization reaction time cannot be generalized because it depends on the polymerization reaction temperature, catalytic amount, and type of alkylene oxide, but is typically preferably 2 to 40 hours.

After completion of the polymerization reaction, the reaction product is separated by filtration or the like, optionally washed with a solvent or the like, and dried to obtain a polyalkylene carbonate resin.

The polyalkylene carbonate resins for constituting the polyolefin-based resin composition can be used singly or in a combination of two or more.

The mass-average molecular weight of the polyalkylene carbonate resin is such that the lower limit is preferably 10,000, the upper limit is preferably 2,000,000, the lower limit is more preferably 30,000, the upper limit is more preferably 1,000,000, the lower limit is further preferably 50,000, the upper limit is further preferably 750,000. The mass-average molecular weight is a value determined by preparing a polyalkylene carbonate resin dissolved in N,N-dimethylformamide at a concentration of 0.5%, conducting a measurement by high-performance liquid chromatography, and making a comparison with polystyrene having a known mass-average molecular weight, which has been measured under the same conditions. The measurement conditions are as follows.

Column: GPC column (Showa Denko K.K., product name: Shodex OHPac SB-800 series)
Column Temperature: 40°C
Eluate: 0.03 mol/L lithium bromide-N,N-dimethylformamide solution Flow Rate: 0.6 mL/min

A polyalkylene carbonate resin having a mass-average molecular weight of 10,000 or more can exhibit improved mechanical strength of the resulting polyolefin-based resin composition. Further, a polyalkylene carbonate resin having a mass-average molecular weight of 2,000,000 or less can exhibit improved dispersibility in a polyolefin-based resin.

The content of the polyalkylene carbonate resin in the polyolefin-based resin composition is such that the lower limit is preferably 0.05 parts by mass, the upper limit is preferably 20 parts by mass, the lower limit is more preferably 0.5 parts by mass, the upper limit is more preferably 10 parts by mass, the lower limit is further preferably 1 part by mass, the upper limit is further preferably 5 parts by mass, per 100 parts by mass of the polyolefin-based resin. When the content of the polyalkylene carbonate resin is more than 20 parts by mass, the mechanical strength or the breaking strain of the polyolefin-based resin composition may slightly decrease. Further, when the content of the polyalkylene carbonate resin is less than 0.05 parts by mass, the effects of the modification of the polyolefin-based resin composition may not be significantly exerted.

The ionic liquid is a salt of a cation and an anion having a melting point of 100°C or less. In the present invention, a salt in a liquid state at room temperature (25°C) is preferable.

The cation of the ionic liquid is, for example, ammonium ion, pyridinium ion, pyrrolidinium ion, pyrrolinium ion, oxazolium ion, oxazolinium ion, imidazolium ion, thiazolium ion or phosphonium ion, more preferably imidazolium ion, pyrrolidinium ion, pyridinium ion, ammonium ion or phosphonium ion, further preferably imidazolium ion or pyrrolidinium ion.

The anion of the ionic liquid is, for example, halogen ion, phosphate ion, nitrate ion, sulfate ion, bisulfate ion, sulfonate ion, tosylate ion, perchlorate ion, aluminate ion, dialuminate ion, borate ion, amide ion, dicyanamide ion, succinate ion, thiocyanate ion, or carboxylate ion; more specifically, chloride, bromide, tetrafluoroborate , alkyl borate, aryl borate, halophosphate, nitrate, sulfonate, bisulfate, alkyl sulfate, thiocyanate, perfluorinated amide, dicyanamide, bis(perfluoroalkyl sulfonyl) amide, acetate, trifluoro acetate are preferable.

The imidazolium ion is preferably a cation represented by formula (1) below: 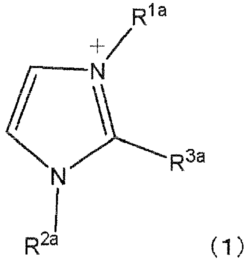 wherein, R^{1a} and R^{2a} may be same or different, and each represents a C₁₋₁₀ substituted or unsubstituted hydrocarbon group, or a C₆₋₂₀ substituted or unsubstituted aromatic hydrocarbon group; and R^{3a} represents hydrogen or methyl.

The C₁₋₁₀ substituted or unsubstituted hydrocarbon group is preferably an unsubstituted hydrocarbon group, more preferably a linear alkyl or alkenyl group. Further, the number of carbon atoms is preferably 1 to 8, more preferably 1 to 6, further preferably 1 to 4. Of these, a linear alkyl group having 1, 2, 3, 4, 5, or 6 carbon atoms, or a linear alkenyl group having 2, 3, or 4 carbon atoms (in particular, a vinyl group or allyl group) is preferable.

Further, the C₆₋₂₀ substituted or unsubstituted aromatic hydrocarbon group is preferably an unsubstituted aromatic hydrocarbon group. More specifically, a benzyl group or the like is preferable.

Specifically, the imidazolium ion is preferably an ion wherein R^{1a} is a methyl group, R^{2a} is a methyl group, ethyl group, butyl group, decyl group, allyl group, or benzyl group, and R^{3a} represents hydrogen or methyl.

The pyrrolidinium ion is preferably a cation represented by formula (2) below: 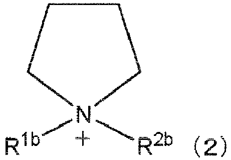 wherein, R^{1b} and R^{2b} may be same or different, and each represents a C₁₋₁₀ substituted or unsubstituted hydrocarbon group.

The C₁₋₁₀ substituted or unsubstituted hydrocarbon group is preferably an unsubstituted hydrocarbon group, more preferably a linear alkyl or alkenyl group. Further, the number of carbon atoms is preferably 1 to 8, more preferably 1 to 6, further preferably 1 to 4. Of these, a linear alkyl group having 1, 2, 3, 4, 5, or 6 carbon atoms, or a linear alkenyl group having 2, 3 or 4 carbon atoms (in particular, a vinyl group or allyl group) is preferable, and a linear alkyl group having 1, 2, 3, or 4 carbon atoms is particularly preferable.

A preferable pyrrolidinium ion is specifically an ion wherein R^{1b} is methyl group, R^{2b} is methyl group, ethyl group, or butyl group.

The pyridinium ion is preferably a cation represented by formula (3) below: 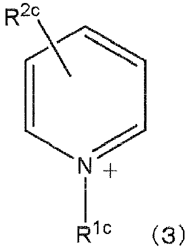 wherein, R^{1c} and R^{2c} may be same or different, R^{1c} represents a C₁₋₁₀ substituted or unsubstituted hydrocarbon group, and R^{2c} represents a C₁₋₁₀ substituted or unsubstituted hydrocarbon group or hydrogen.

The C₁₋₁₀ substituted or unsubstituted hydrocarbon group is preferably an unsubstituted hydrocarbon group, more preferably a linear alkyl or alkenyl group. Further, the number of carbon atoms is preferably 1 to 8, more preferably 1 to 6, further preferably 1 to 4. Of these, a linear alkyl group having 1, 2, 3, 4, 5, or 6 carbon atoms, or a linear alkenyl group having 2, 3, or 4 carbon atoms (in particular, a vinyl group or allyl group) is preferable, and a linear alkyl group having 1, 2, 3, or 4 carbon atoms is particularly preferable.

Further, R^{2c} is preferably present at the 3-position or 4-position.

A preferable pyridinium ion is specifically an ion wherein R^{1c} is methyl group, ethyl group, propyl group or butyl group, R^{2c} is methyl group or hydrogen, and R^{2c} is present at the 3-position or 4-position.

The ammonium ion is preferably a cation represented by formula (4) below: 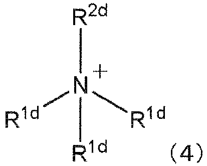 wherein R^{1d} and R^{2d} may be same or different, and each represents a C₁₋₁₀ substituted or unsubstituted hydrocarbon group.

The C₁₋₁₀ substituted or unsubstituted hydrocarbon group is preferably an unsubstituted hydrocarbon group, more preferably a linear alkyl or alkenyl group. Further, the number of carbon atoms is preferably 1 to 8, more preferably 1 to 6, further preferably 1 to 4. Of these, a linear alkyl group having 1, 2, 3, 4, 5, 6, 7, or 8 carbon atoms, or a linear alkenyl group having 2, 3 or 4 carbon atoms (in particular, a vinyl group or allyl group) is preferable, and a linear alkyl group having 1, 2, 3, or 4 carbon atoms is particularly preferable.

A preferable ammonium ion is specifically an ion wherein R^{1d} is a linear alkyl group having 1, 2, 3, 4, 5, 6, 7, or 8 carbon atoms, and R^{2d} is methyl, or the same group as R^{1d}.

The phosphonium ion is preferably a cation represented by formula (5) below: 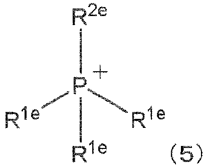 wherein, R^{1e} and R^{2e} may be same or different, and each represents a C₁₋₁₀ substituted or unsubstituted hydrocarbon group.

The C₁₋₁₀ substituted or unsubstituted hydrocarbon group is preferably an unsubstituted hydrocarbon group, more preferably a linear alkyl or alkenyl group. Further, the number of carbon atoms is preferably 1 to 8, more preferably 1 to 6, further preferably 1 to 4. Of these, a linear alkyl group having 1, 2, 3, 4, 5, 6, 7, or 8 carbon atoms, or a linear alkenyl group having 2, 3 or 4 carbon atoms (in particular, a vinyl group or allyl group) is preferable, and a linear alkyl group having 1, 2, 3, or 4 carbon atoms is particularly preferable.

Examples of preferable phosphonium ions include an ion wherein R^{1e} is a linear alkyl group having 1, 2, 3, 4, 5, 6, 7, or 8 carbon atoms, and R^{2e} is a methyl group, or the same group as R^{1e}.

The ionic liquid constituting the polyolefin-based resin composition is preferably a pyrrolidinium salt or an imidazolium salt.

Further, the combination of the cation and anion of the ionic liquid is preferably a combination of a cation selected from the group constituting of imidazolium ion, pyrrolidinium ion, pyridinium ion, ammonium ion and phosphonium ion, and an anion selected from the group consisting of halogen, tetrafluoroborate, alkyl borate, aryl borate, halophosphate, nitrate, sulfonate, bisulfate, alkyl sulfate, thiocyanate, carboxylate, perfluorinated amide, dicyanamide, and bis(perfluoroalkyl sulfonyl)amide; and more preferably a combination of a cation selected from the group constituting of imidazolium ion and pyrrolidinium ion, and an anion selected from the group consisting of halogen, carboxylate, hexafluoro phosphate, tetrafluoroborate and bis(perfluoroalkyl sulfonyl)amide. Among bis(perfluoroalkyl sulfonyl)amides, bis(trifluoromethanesulfonyl)amide is preferable.

Among the above combinations, a combination of, as a cation, 1-butyl-3-methyl imidazolium or N-butyl-N-methyl pyrrolidinium, and, as an anion, tetrafluoroborate or bis(trifluoromethanesulfonyl)amide, is particularly preferable.

The ionic liquid content in the polyolefin-based resin composition is such that the lower limit is preferably 0.01 parts by mass, the upper limit is preferably 5 parts by mass, the lower limit is more preferably 0.1 parts by mass, the upper limit is more preferably 3 parts by mass, the lower limit is further preferably 0.5 parts by mass, and the upper limit is further preferably 2 parts by mass, per 100 parts by mass of polyolefin-based resin. When the ionic liquid content is within the above range, it is possible to improve the resilience without greatly decreasing other properties of the polyolefin-based resin composition.

The method for producing the polyolefin-based resin composition is not particularly limited. Examples include a method comprising mixing, in no particular order, a polyolefin-based resin, a polyalkylene carbonate resin, and an ionic liquid using a Henschel mixer, a ribbon blender, a blender, or the like, and melt-kneading the resulting mixture; a method comprising mixing a polyalkylene carbonate resin in which an ionic liquid is immersed in advance with a polyolefin-based resin, followed by melt-kneading; and a method of dissolving and mixing a polyolefin-based resin, a polyalkylene carbonate resin, and an ionic liquid in a solvent or the like, and removing the solvent. Of these production methods, the method comprising melt-kneading a polyolefin-based resin, a polyalkylene carbonate resin, and an ionic liquid is preferably used from the standpoint of the simplicity of producing the composition as well as the capability of producing a homogeneous composition. For example, a method comprising adding a polyolefin-based resin to a mixture obtained by immersing an ionic liquid in a polyalkylene carbonate resin, followed by melt-kneading is preferably used.

The method for melt-kneading a polyolefin-based resin, a polyalkylene carbonate resin, and an ionic liquid is not particularly limited. Examples include melt-kneading methods using a uniaxial extruder, a biaxial extruder, a Banbury mixer, a kneader, a roll kneader, or the like.

The shape of the polyolefin-based resin composition is not restricted, and may be any shape including a strand, a sheet, a flat plate, and a pellet. In particular, a pellet is preferable in order to easily supply it to a molding device. The polyolefin-based resin composition is preferably a solid composition.

Insofar as the effects of the present invention are not impaired, the polyolefin-based resin composition may comprise other additives, for example, antioxidants; stabilizers such as ultraviolet absorbers or light stabilizers; flame retardants; antistatic agents; antimicrobial agents; nucleating agents; lubricants; anti-blocking agents; colorants; and fillers.

Examples of antioxidants include 2,6-di-t-butyl-p-cresol (BHT), 2,2'-methylenebis(4-methyl-6-t-butylphenol), tetrakis[methylene-(3,5-di-t-butyl-4-hydroxyhydrocinnamate)]methane, dilauryl-3,3'-thiodipropionate (DLTDP), distearyl-3,3'-thiodipropionate(DSTDP), triphenyl phosphite (TPP), triisodecyl phosphite (TDP), octylated diphenylamine, N-n-butyl-p-aminophenol, and N,N-diisopropyl-p-phenylenediamine.

Examples of UV absorbers include 2-hydroxy benzophenone, 2,4-dihydroxy benzophenone, phenylsalicylate, 2,4-di-t-butylphenyl-3,5-di-t-butyl-4-hydroxybenzoate), 2'-hydroxy phenyl benzotriazole, (2'-hydroxy-5'-methylphenyl)benzotriazole, ethyl-2-cyano-3,3-diphenylacrylate, and methyl-2-carbomethoxy-3-(para-methoxybenzyl)acrylate.

Examples of light stabilizers include 2,2,6,6-tetramethyl-4-piperidyl stearate, bis(2,2,6,6-tetramethyl-4-piperidyl)sebacate, tetrakis(2,2,6,6-tetramethyl-4-piperidyl)-1,2,3,4-butane tetracarboxylate, bis(2,2,6,6-tetramethyl-4-piperidyl)-di(tridecyl)-1,2,3,4-butane tetracarboxylate, bis(1,2,2,4,4-pentamethyl-4-piperidyl)-2-butyl-2-(3,5-di-t-butyl-4-hydroxybenzyl)malonate, 1-(2-hydroxyethyl)-2,2,6,6-tetramethyl-4-piperidinol/diethyl succinate polycondensation product, 1,5,8,12-tetrakis[2,4-bis(N-butyl-N-(2,2,6,6-tetramethyl-4-piperidyl)amino)-s-triazin-6-yl]-1,5,8,12- tetraazadodecane, and 1,5,8,12-tetrakis[2,4-bis(N-butyl-N-(1,2,2,6,6-pentamethyl-4-piperidyl)amino)-s-triazin-6-yl]-1,5,8-12-tetraazadodecane.

Examples of flame retardants include tricresyl phosphate, tris(2,3-dibromopropyl)phosphate, decabromo biphenylether, tetrabromo bisphenol A, antimony trioxide, magnesium hydroxide, zinc borate, barium metaborate, aluminum hydroxide, red phosphorus, ammonium polyphosphate and het acid.

Examples of antistatic agents include dodecyl benzene sulfonic acid sodium, polyethylene oxide, polypropylene oxide, polyethylene glycol, polyester amide, and polyether ester amide. The ionic liquid may also serve as an antistatic agent.

Examples of antimicrobial agents include 2-bromo-2-nitro-1,3-propanediol, 2,2-dibromo-2-nitroethanol, methylenebis thiocyanate, 1,4-bisbromoacetoxy-2-butene, hexabromo dimethyl sulfone, 5-chloro-2,4,6-trifluoroisophthalonitrile, tetrachloroisophthalonitrile, dimethyldithiocarbamate, 4,5-dichloro-1,2-diol-3-one, 3,3,4,4-tetrachlorotetrahydrothiophene-1,1-dioxide, triiodo allyl alcohol, bromo nitro styrene, glutaraldehyde, phthalaldehyde, isophthalaldehyde, terephthalaldehyde, dichloroglyoxime, α-chlorobenzaldoxime, α-chlorobenzaldoximeacetate, 1,3-dichloro-5,5-dimethylhydantoin, and 1,3-dibromo-5,5-dimethylhydantoin.

Examples of nucleating agents include 1,3:2,4-dibenzylidene sorbitol, sodium-2,2'-methylene-bis(4,6-di-t-butylphenyl)phosphate, bis(2,4,8,10-tetra-t-butyl-hydroxy-12H-dibenzo[d,g] [1,3,2]dioxaphosphocin-6-oxide), aluminum benzoate, sodium adipate, thiophenecarboxylic acid sodium salt, and pyrrole carboxylic acid sodium salt.

Examples of lubricants include liquid paraffin, natural paraffin, micro wax, polyethylene wax, stearic acid, stearamide, palmitic acid amide, methylenebis stearyl amide, butyl stearate, hydrogenated castor oil, and ethylene glycol monostearate.

Examples of anti-blocking agents include talc, silica, calcium carbonate, synthetic zeolite, starch, and bis-stearic acid amide.

Examples of colorants include inorganic pigments such as titanium oxide, lithopone, white lead, zinc oxide, aureolin, cobalt green, cerulean blue, cobalt blue, cobalt violet, iron oxide, iron blue, chromium oxide, lead chromate, barium chromate, cadmium sulfide, cadmium yellow, or ultramarine; azo pigments such as azo lake-based pigments, monoazo-based pigments, disazo-based pigments, or chelate azo-based pigments; organic pigments such as benzimidazolone-based pigments, phthalocyanine-based pigments, quinacridone-based pigments, dioxazine-based pigments, isoindolinone-based pigments, thioindigo-based pigments, perylene-based pigments, quinophthalone-based pigments or anthraquinone-based polycyclic pigments; azo-based dyes, anthraquinone-based dyes, indigoid-based dyes, sulfide-based dyes, triphenylmethane-based dyes, pyrazolone-based dyes, stilbene-based dyes, diphenylmethane-based dyes, xanthene-based dyes, alizarin-based dyes, acridine-based dyes, quinoneimine-based dyes, thiazole-based dyes, methine-based dyes, nitro-based dyes, nitroso-based dyes, and aniline-based dyes.

Examples of fillers include inorganic fillers such as calcium carbonate, talc, clay, silicic acid, silicate, asbestos, mica, glass fiber, glass balloon, carbon fiber, metal fiber, ceramic whisker, or titanium whisker; and organic fillers such as urea, calcium stearate, organic cross-linked particles (for example, epoxy-based or urethane-based cross-linked particles), cellulose fiber, or wood flour.

These other additives may be used singly or in a combination of two or more.

When such other additives are added, the amount is such that the lower limit is preferably 0.01 parts by mass, the upper limit is preferably 100 parts by mass, the lower limit is more preferably 0.5 parts by mass, the upper limit is more preferably 50 parts by mass, the lower limit is further preferably 0.1 parts by mass, and the upper limit is further preferably 10 parts by mass, per 100 parts by mass of the polyolefin-based resin composition.

In the polyolefin-based resin composition, the resilience of the polyolefin-based resin is improved. Although a restrictive interpretation is not desired because this mechanism is not clarified, it can be assumed that the ionic liquid exerts a compatibilizing effect (i.e., the ionic liquid serves as a compatibilizer). More specifically, it can be assumed that the dispersion state of the polyalkylene carbonate resin in the polyolefin-based resin is changed, and also the liquid compound (i.e., the ionic liquid) is effectively dispersed in the polyolefin-based resin, thereby obtaining a polyolefin-based resin composition with improved resilience.

Therefore, the present invention also encompasses a compatibilizer of a polyolefin-based resin and a polyalkylene carbonate resin made of an ionic liquid. By adding the compatibilizer upon mixing of a polyolefin-based resin and a polyalkylene carbonate resin, it is possible to preferably evenly mix these two resins. The ionic liquid to be used for the compatibilizer, the polyolefin-based resin and the polyalkylene carbonate resin to which the compatibilizer is added, the preferable mixing ratio of the compatibilizer, and the like are the same as those stated in regard to the polyolefin-based resin composition of the present invention.

### Molded Article

The molded article is obtained from the polyolefin-based resin composition described above.

Examples of methods for obtaining the molded article include injection molding, compression molding, injection compression molding, gas-assisted injection molding, foam injection molding, inflation molding, T-die molding, calendar molding, blow molding, vacuum molding, pressure molding and rotational molding.

When the molded article is in the form of a film or sheet, such a molded article may be formed as at least one layer of a multi-layered structure having different resins produced by inflation molding, T-die molding, or calendar molding. Alternatively, the molded article may be formed as a multi-layered film or sheet by extrusion lamination, thermal lamination, dry lamination, or the like. The obtained film or sheet can be mono- or biaxially stretched for use by roll stretching, tenter stretching, tubular stretching, or the like. Among the molded articles, films to be mono- or biaxially stretched are described later.

The molded article may be subjected to a surface treatment, such as corona discharge treatment, flame treatment, plasma treatment, or ozone treatment.

The molded article of the present invention can be used as electrical and electronic components, building components, auto parts, machine components, daily commodities, industrial materials, and the like. Specific examples of electrical and electronic components include housings and internal parts of photocopy machines, personal computers, printers, electronic musical instruments, home-use game consoles, and portable game players. Specific examples of building components include curtain parts, blind parts, roof panels, thermal insulation walls, adjusters, floor posts, and ceiling hoisting attachments. Specific examples of auto parts include fenders, over fenders, grille guards, cowl louvers, wheel caps, side protectors, side moldings, side lower skirts, front grilles, roof rails, rear spoilers, bumpers, lower instrument panels, and trims. Specific examples of machine components include gears, screws, springs, bearings, levers, cams, ratchets, and rollers. Specific examples of daily commodities include cutlery, toiletry products, carton boxes, packaging films, wrapping films, laminated paper bags, prepaid cards, blades for cling films, food trays, garbage bags, laminated bags, pouches, labels, thermoformed molded articles, packing bands, woven or knitted goods (garments, interior accessories), carpets, hygienic materials, packaging films, containers, and cups for food. Specific examples of industrial materials include textile binders, paper coating, adhesives, agricultural films, spun yarn, slit yarn, ropes, nets, filters, woven or knitted goods (industrial materials), compost bags, waterproof sheets, and sandbags.

### Polyolefin-based Resin Film

A polyolefin-based resin film is formed by molding the polyolefin-based resin composition described above into a film-like shape. In particular, a polyolefin-based resin film is formed by being stretched at least in the monoaxial direction.

Since the polyolefin-based resin film is formed by molding the polyolefin-based resin composition, the polyolefin-based resin film has a feature that the mechanical property is retained, the resilience is improved, and the film does not easily yield.

Further, since the polyolefin-based resin film is formed by being stretched at least in the monoaxial direction, the surface resistivity greatly decreases and the antistatic performance is improved. Therefore, defects at the time of use of the polyolefin-based resin film, such as adhesion of dust, can be reduced.

The method for producing the polyolefin-based resin film is not particularly limited. Similarly to the molded article described above, the polyolefin-based resin film may be obtained by, after the polyolefin-based resin composition is produced, molding the polyolefin-based resin composition into a film-like shape by T-die molding, inflation molding, calendar molding, solvent casting, thermal press molding or the like, and stretching the film at least in the monoaxial direction.

The method for stretching the polyolefin-based resin film at least in the monoaxial direction is also not particularly limited, and a method of mono- or biaxially stretching the polyolefin-based resin film by roll stretching, tenter stretching, tubular stretching, or the like may be used.

A polyolefin-based resin film may be stretched while being heated. By heating the film, it is possible to evenly stretch the film at a high stretching magnification. The lower limit of the heating temperature is preferably equal to or more that the glass transition temperature of polyolefin-based resin, and more preferably at least 30°C higher than the glass transition temperature, further preferably at least 50°C higher than the glass transition temperature. The upper limit of the heating temperature is preferably equal to or lower than the melting point of the polyolefin-based resin, more preferably at least 5°C lower than the melting point, and further preferably at least 10°C lower than the melting point.

The direction to which the polyolefin-based resin film is stretched is not particularly limited, and the film may be stretched in any arbitrary direction. For example, for a polyolefin-based resin film obtained by extrusion molding or injection molding, the resin film may be stretched in at least either of the direction of resin flow upon molding (MD direction), and the perpendicular direction thereof (TD direction).

The stretching magnification of the polyolefin-based resin film is not particularly limited. For example, the stretching magnification of the polyolefin-based resin film is 1.01 to 20.0. Such a film has no defects, can easily be molded, and expresses sufficient antistatic performance. In terms of further increasing the antistatic performance of the polyolefin-based resin film, the lower limit of the stretching magnification is more preferably 1.50 times, particularly preferably 2.0 times. In the same view, the upper limit of the stretching magnification is more preferably 10.0 times, particularly preferably 5.0 times.

Further, when the polyolefin-based resin film has a resin flow direction (MD direction) and a perpendicular direction (TD direction), in terms of molding the film as a defect-free film and expressing sufficient antistatic performance, the stretching magnification in the stretching in at least one of the MD direction and the TD direction is preferably 1.01 to 20.0 times. In terms of further increasing the antistatic performance of the polyolefin-based resin film, the lower limit of the stretching magnification in the stretching in at least one of the MD direction and the TD direction is more preferably 1.50 times, and particularly preferably 2.0 times. Further, in the same view, the upper limit of the stretching magnification in the stretching in at least one of the MD direction and the TD direction is more preferably 10.0 times, and particularly preferably 5.0 times.

The thickness of the polyolefin-based resin film is not particularly limited; for example, the thickness is 0.01 to 10 mm. If the thickness is within this range, desirable moldability may be maintained, and a polyolefin-based resin film with superior antistatic performance is more easily obtained. The thickness is more preferably 0.05 to 1 mm.

A polyolefin-based resin film thus stretched has a lower surface resistivity than that of an unstretched polyolefin-based resin film. Although the value of surface resistivity differs depending on the resin type, it is preferable that, for example, when the stretching magnification is 2 times, the surface resistivity after the stretching is decreased by 1/10 to 1/1000 relative to the surface resistivity before the stretching, and when the stretching magnification is 9 times, the surface resistivity after the stretching is decreased by 1/100 to 1/10000 relative to the surface resistivity before the stretching. Within this range, the stretched polyolefin-based resin film has sufficient antistatic performance.

A mechanism of further improving the antistatic performance of the polyolefin-based resin film may be presumably such that the domain containing the ionic liquid of the polyalkylene carbonate resin is linearly deformed by stretching, thereby forming a conductive path. More specifically, the following is assumed. In the polyolefin-based resin composition, the polyalkylene carbonate resin is dispersed in the polyolefin-based resin matrix, and this dispersion state has a "sea-island structure." Further, because the polyolefin-based resin composition has such a dispersion state, when the polyolefin-based resin film is molded without being stretched, a conductive path may not be easily formed, and the surface resistance of the obtained polyolefin-based resin film hardly decreases. However, when the polyolefin-based resin film is stretched, the shape of the domain of the polyalkylene carbonate resin is stretched, thereby causing easy contact; consequently, a conductive path is formed in the polyolefin-based resin film through an ionic liquid as a medium. As a result, the surface resistance of the polyolefin-based resin film decreases compared with that before stretching, and thereby further superior antistatic performance can be expressed.

The polyolefin-based resin film may be used for various purposes, such as wrapping materials, masking materials, electronic components packaging materials, tape materials, plastic bags, packaging materials for pharmaceuticals or sundries, plastic wraps for food, transportation packaging materials and the like. Further, the polyolefin-based resin film may also be used as a lamination film by adhering it with paper, non-woven fabric, cellophane, or the like. In addition, the polyolefin-based resin film may also be used as a label to be attached on another plastic resin molded article.

### Examples

The present invention is more specifically described below with reference to Production Examples, Examples, and Comparative Examples. However, the present invention is not limited to these Examples.

### Production Example 1

### Production of Organozinc Catalyst

A 0.5-L four-necked flask equipped with a stirrer, a nitrogen gas feeding tube, a thermometer, a Dean-Stark tube, and a reflux condenser was charged with 7.73 g (95 mmol) of zinc oxide, 12.3 g (100 mmol) of glutaric acid, 0.114 g (2 mmol) of acetic acid, and 76.0 g of toluene. Subsequently, the temperature was raised to 55°C while introducing nitrogen into the reaction system at a flow rate of 50 mL/min, followed by stirring at the same temperature for four hours to allow a reaction. The temperature was then raised to 110°C, and the mixture was stirred at the same temperature for two hours to allow azeotropic dehydration to remove moisture. The reaction mixture was then cooled to room temperature, thereby giving a slurry liquid containing an organozinc catalyst.

### Production Example 2

### Production of Polypropylene Carbonate

The atmosphere of a 1-L autoclave equipped with a stirrer, a gas feeding tube, and a thermometer was replaced with a nitrogen atmosphere in advance, and the autoclave was charged with 39.1 g of the slurry liquid containing an organozinc catalyst (containing 45 mmol of an organozinc catalyst) obtained in Production Example 1, 192.4 g of dimethyl carbonate, and 26.1 g (450 mmol) of propylene oxide. Subsequently, carbon dioxide was added thereto while stirring so as to fill the reaction system with carbon dioxide until the reaction system was 1.0 MPa. Thereafter, the temperature was raised to 60°C, and a polymerization reaction was performed for eight hours while supplying carbon dioxide consumed by the reaction. After completion of the reaction, the autoclave was cooled and depressurized, and the reaction mixture was filtered and dried under reduced pressure, thereby giving 40 g of polypropylene carbonate. The obtained polypropylene carbonate had a mass-average molecular weight of 336,000 (Mw/Mn = 9.02).

The mass-average molecular weight is a value determined by preparing a polypropylene carbonate dissolved in N,N-dimethylformamide at a concentration of 0.5%, conducting a measurement by high-performance liquid chromatography, and making a comparison with polystyrene having a known mass-average molecular weight, which has been measured under the same conditions. The measurement conditions are as follows.

Column: GPC column
(Showa Denko K.K., product name: Shodex OHPac SB-800 series)
Column Temperature: 40°C
Eluate: 0.03 mol/L lithium bromide-N,N-dimethylformamide solution Flow rate: 0.6 mL/min

### Production Example 3

### Production of Polypropylene Carbonate

The same method as in Production Example 2 was performed except that the polymerization reaction time was changed from eight hours to ten hours, thereby obtaining 40 g of polypropylene carbonate. The mass-average molecular weight of the obtained polypropylene carbonate was 330,000 (Mw/Mn=10.02).

### Example 1

The polypropylene carbonate pellet obtained in Production Example 2 was added to 1-butyl-3-methylimidazolium tetrafluoroborate (hereinafter referred to as "BMI-BF₄"), and permeated at 25°C for 24 hours under vacuum for avoiding moisture absorption. According to the weight after permeation, the BMI-BF₄ permeation amount was 26.7 wt% relative to the polypropylene carbonate. The polypropylene carbonate pellet impregnated with an ionic liquid and polypropylene (Japan Polypropylene Corporation, Mw=380,000, Mw/Mn=4.9) were supplied to a micro-compounder (DSM Xplore) and kneaded at 180°C for five minutes at a rotation rate of 50 rpm, and then allowed to stand at room temperature, thereby obtaining a polyolefin-based resin composition.

### Example 2

The same method as in Example 1 was performed, except that the ionic liquid was changed to N-butyl-N-methylpyrrolidinium bis(trifluoromethanesulfonyl)amide (hereinafter referred to as "P14-TFSA"), thereby obtaining a polyolefin-based resin composition.

### Example 3

The same method as in Example 1 was performed, except that the ionic liquid was changed to 1-butyl-3-methylimidazolium bis(trifluoromethanesulfonyl)amide (hereinafter referred to as "BMI-TFSA"), thereby obtaining a polyolefin-based resin composition.

### Example 4

The same method as in Example 1 was performed, except that the ionic liquid was changed to N-butyl-N-methylpyrrolidinium tetrafluoroborate (hereinafter referred to as "P14-BF₄"), thereby obtaining a polyolefin-based resin composition.

### Comparative Example 1

Only polypropylene was kneaded under the same conditions as in Example 1, thereby obtaining a polyolefin-based resin composition.

### Comparative Example 2

The kneading was performed under the same conditions as in Example 1, except that the ionic liquid was not used, thereby obtaining a polyolefin-based resin composition.

### Comparative Example 3

The kneading was performed under the same conditions as in Example 1, except that the polypropylene carbonate was not used. As a result, the ionic liquid was immiscible and a polyolefin-based resin composition was not obtained.

### Comparative Example 4

The kneading was performed under the same conditions as in Example 1, except that maleic acid modified polypropylene (Admer QE800, manufactured by Mitsui Chemicals, Inc. MFR=9.1 g/10 min) was used as a compatibilizer instead of the ionic liquid, thereby obtaining a polyolefin-based resin composition.

Table 1 shows formulations of the polyolefin-based resin (polypropylene), the polyalkylene carbonate resin, and the ionic liquid (as well as the maleic acid modified polypropylene in Comparative Example 4) in Examples 1 to 4 and Comparative Examples 1 to 4.

The structural formulas of the ionic liquids used in the Examples are shown below.

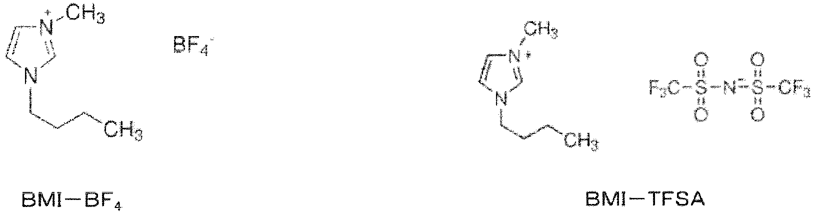

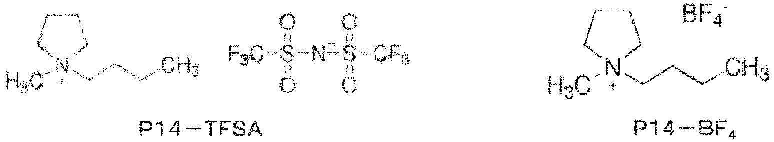

### Evaluation Method 1

The differential scanning calorimetry (DSC Measurement) and a uniaxial tensile test of the polyolefin-based resin compositions obtained in the Examples and the Comparative Examples were conducted in accordance with the following method. The uniaxial tensile test was conducted using test specimens obtained by hot-press molding.

### (1) Differential Scanning Calorimetry (DSC measurement)

The crystallization temperature and the melting point of the polyolefin-based resin composition were measured using the instrument below.

Measuring Instrument: Diamond DSC, manufactured by PerkinElmer Inc.
Temperature Rising Rate: 20°C/min
Temperature Falling Rate: 20°C/min
Measuring Temperature Range: 0 to 230°C

### (2) Hot-Press Molding

Test specimens for use in the tensile test were prepared by hot-press molding.

Instrument: Desktop Hot Press, manufactured by Techno Supply Press Temperature: 230°C
Press Pressure: 20 Mpa

### (3) Tensile Test

The yield stress, necking stress, necking strain, breaking stress, breaking strain, and elastic modulus were measured using the following test specimen and instrument in accordance with JIS K 7161:1994. Further, the resilience was calculated from the integration value to the end of necking strain in a stress-strain curve.

A test specimen having a higher yield stress and a higher necking stress is regarded as a hard material with excellent strength. A test specimen having a higher breaking stress and a higher breaking strain is regarded as a persistent material with an excellent stretching property. A test specimen having a higher necking strain and a higher resilience is regarded as a material with superior toughness. A test specimen having a higher elastic modulus is regarded as a material less subject to deformation.

Test Specimens: Dumbbell Shape (10 mm in parallel portion length, 4 mm in parallel portion width, and 0.2 mm in thickness) Measuring Instrument: MODEL 4466, Tensile Testing Machine, manufactured by Instron
Tension Rates: 10 mm/min and 120 mm/min
Measurement Temperature: 25°C

Tables 1 and 2 show the evaluation results for the resin compositions obtained in Examples and Comparative Examples. Table 1 shows the results at a tension rate of 120 mm/min, and Table 2 shows the results at a tension rate of 10 mm/min.

**Table 1**

| Tension Rate | 120 mn/min | | | | | | | | | |
|---|---|---|---|---|---|---|---|---|---|---|
| | | | Example 1 | Example 2 | Example 3 | Example 4 | Comparative Example 1 | Comparative Example 2 | Comparative Example 3 | Comparative Example 4 |
| Formulation (parts by mass) | Polypropylene | | 96 | 96 | 96 | 96 | 100 | 97 | 99 | 96 |
| | Polypropylene Carbonate | | 3 | 3 | 3 | 3 | 0 | 3 | 0 | 3 |
| | Ionic Liquid | BMI-BF₄ | 1 | 0 | 0 | 0 | 0 | 0 | 0 | 0 |
| | | P14-TFSA | 0 | 1 | 0 | 0 | 0 | 0 | 1 | 0 |
| | | BMI-TFSA | 0 | 0 | 1 | 0 | 0 | 0 | 0 | 0 |
| | | P14-BF₄ | 0 | 0 | 0 | 1 | 0 | 0 | 0 | 0 |
| | Maleic Acid Modified Polypropylene | | 0 | 0 | 0 | 0 | 0 | 0 | 0 | 1 |
| Evaluation | Melting Point | °C | 162 | 165 | 163 | 165 | 164 | 164 | - | 165 |
| | Crystallization Temperature | °C | 113 | 112 | 113 | 113 | 114 | 115 | - | 116 |
| | Yield Stress | MPa | 35.9 | 33.1 | 35.9 | 36.8 | 38.5 | 40.4 | - | 28.4 |
| | Necking Stress | MPa | 25.3 | 23.9 | 25.1 | 25.0 | 27.3 | 27.6 | - | - |
| | Necking Strain | - | 0.4 | 0.4 | 0.4 | 0.3 | 0.2 | 0.3 | - | - |
| | Breaking Stress | MPa | 46.7 | 43.9 | 44.2 | 45.1 | 38.7 | 44.7 | - | 18.8 |
| | Breaking Strain | - | 10.7 | 10.1 | 9.9 | 10.3 | 6.7 | 8.7 | - | 0.2 |
| | Elastic Modulus | MPa | 748 | 693 | 903 | 857 | 796 | 846 | - | 660 |
| | Resilience | J/m³ | 10.3 | 10.0 | 10.9 | 6.6 | 6.5 | 7.0 | - | 2.7 |

**Table 2**

| Tension Rate | 10 mm/min | | | | | | | | | |
|---|---|---|---|---|---|---|---|---|---|---|
| | | | Example 1 | Example 2 | Example 3 | Example 4 | Comparative Example 1 | Comparative Example 2 | Comparative Example 3 | Comparative Example 4 |
| Formulation (parts by mass) | Polypropylene | | 96 | 96 | 96 | 96 | 100 | 97 | 99 | 96 |
| | Polypropylene Carbonate | | 3 | 3 | 3 | 3 | 0 | 3 | 0 | 3 |
| | Ionic Liquid | BMI-BF₄ | 1 | 0 | 0 | 0 | 0 | 0 | 0 | 0 |
| | | P14-TFSA | 0 | 1 | 0 | 0 | 0 | 0 | 1 | 0 |
| | | BMI-TFSA | 0 | 0 | 1 | 0 | 0 | 0 | 0 | 0 |
| | | P14-BF₄ | 0 | 0 | 0 | 1 | 0 | 0 | 0 | 0 |
| | Maleic Acid Modified Polypropylene | | 0 | 0 | 0 | 0 | 0 | 0 | 0 | 1 |
| Evaluation | Yield Stress | MPa | 32.5 | 27.7 | 29.7 | 33.4 | 34.2 | 34.9 | - | 33.3 |
| | Necking Stress | MPa | 25.6 | 22.3 | 24.9 | 26.3 | 25.7 | 27.0 | - | 26.4 |
| | Necking Strain | - | 0.36 | 0.69 | 0.91 | 0.33 | 0.28 | 0.26 | - | 0.30 |
| | Breaking Stress | MPa | 44.0 | 37.6 | 38.2 | 45.4 | 52.2 | 49.2 | - | 30.0 |
| | Breaking Strain | - | 12.0 | 10.3 | 10.5 | 12.3 | 13.5 | 13.3 | - | 6.2 |
| | Elastic Modulus | MPa | 729 | 771 | 820 | 822 | 700 | 805 | - | 808 |
| | Resilience | J/m³ | 7.6 | 14.0 | 21.5 | 8.1 | 6.0 | 7.4 | - | 7.7 |

A comparison between Examples 1 to 4 and Comparative Example 1 revealed that the resilience was improved while maintaining the original mechanical strength of polypropylene, in particular, when the evaluation was performed at a high tension rate. Comparative Example 2 revealed that the resilience was further improved due to the presence of ionic liquid. Comparative Example 3 revealed that since polypropylene and ionic liquid are not compatible, they cannot be mixed without a polyalkylene carbonate resin. Comparative Example 4 revealed that the resilience could not be improved by maleic acid modified polypropylene, which is often used as a compatibilizer for polypropylene. Further, in particular, the results of Table 2 show that, among the ionic liquids, an ionic liquid in which the anion is bis(trifluoromethanesulfonyl)amide had a higher resilience improvement effect.

### Example 5

Three parts by mass of the polypropylene carbonate obtained in Production Example 3, 1 part by mass of BMI-TFSA, 96 parts by mass of high-density polyethylene (Toray Industries, Inc, Mw=750,000, Mw/Mn=6.3, Tg=-120°C, melting point =134°C) were prepared and supplied to a micro-compounder (DSM Xplore) and kneaded at 160°C for five minutes at a rotation rate of 50 rpm, and then allowed to stand at room temperature, thereby obtaining a polyolefin-based resin composition.

The resulting polyolefin-based resin composition was processed using a Desktop Hot Press (Techno Supply) at a press temperature of 210°C and a pressure of 20 MPa, thereby obtaining a sheet-shaped molded article having a thickness of 0.2 mm.

The resulting sheet-shaped molded article was stretched in the MD direction using a tensile testing machine (MODEL 4466, manufactured by Instron) at 25°C and 120 mm/min so that three sheets having stretching magnifications of 1.5 times, 2 times, and 9 times were obtained. As a result, three polyolefin-based resin films having thicknesses of 0.18 mm (1.5 times), 0.15 mm (2 times) and 0.075 mm (9 times) were obtained.

### Example 6

Two polyolefin-based resin films with stretching magnifications of 2 times and 9 times were obtained in the same manner as in Example 5, except that the ionic liquid was changed to BMI-BF₄.

### Example 7

Two polyolefin-based resin films with stretching magnifications of 2 times and 9 times were obtained in the same manner as in Example 5, except that the amount of the polypropylene carbonate was changed to 10 parts by mass, and the amount of the high-density polyethylene was changed to 89 parts by mass.

### Example 8

Three parts by mass of the polypropylene carbonate obtained in Production Example 3, 1 part by mass of BMI-TFSA, 96 parts by mass of polypropylene (Japan Polypropylene Corporation, Mw=380,000, Mw/Mn=4.9, Tg=3°C, melting point=164°C) were prepared and supplied to a micro-compounder (DSM Xplore) and kneaded at 180°C for five minutes at a rotation rate of 50 rpm, and then allowed to stand at room temperature, thereby obtaining a polyolefin-based resin composition.

The resulting polyolefin-based resin composition was processed using a Desktop Hot Press (Techno Supply) at a press temperature of 230°C and a pressure of 20 MPa, thereby obtaining a sheet-shaped molded article having a thickness of 0.2 mm.

The resulting sheet-shaped molded article was stretched using a tensile testing machine (MODEL 4466, manufactured by Instron) at 25°C and 120 mm/min so that the stretching magnification was 2 times, thereby obtaining a polyolefin-based resin film having a thickness of 0.15 mm.

### Example 9

A polyolefin-based resin film was obtained in the same manner as in Example 8, except that the amount of the polypropylene carbonate was changed to 10 parts by mass, and the amount of the polypropylene was changed to 89 parts by mass.

### Example 10

The polyolefin-based resin composition having the same formulation as that of Example 5 was processed using a Desktop Hot Press (Techno Supply) at a press temperature of 210°C and a pressure of 20 MPa, thereby obtaining a sheet-shaped molded article having a thickness of 1 mm.

The resulting sheet-shaped molded article was stretched in the MD direction using a tensile testing machine (MODEL 4466, manufactured by Instron) at 25°C and 120 mm/min so that three sheets having stretching magnifications of 1.5 times, 2 times, and 9 times were obtained. As a result, three polyolefin-based resin films having thicknesses of 0.9 mm (1.5 times), 0.75 mm (2 times) and 0.4 mm (9 times) were obtained.

### Example 11

The polyolefin-based resin composition having the same formulation as that of Example 5 was processed using a Desktop Hot Press (Techno Supply) at a press temperature of 210°C and a pressure of 20 MPa, thereby obtaining a sheet-shaped molded article having a thickness of 0.2 mm.

The resulting sheet-shaped molded article was stretched in the MD direction using a tensile testing machine (MODEL 4466, manufactured by Instron) at 100°C and 120 mm/min so that two sheets having stretching magnifications of 2 times and 9 times were obtained. As a result, two polyolefin-based resin films having thicknesses of 0.15 mm (2 times) and 0.075 mm (9 times) were obtained.

### Comparative Example 5

Only polyethylene was processed under the same conditions as in Example 5, thereby obtaining a polyolefin-based resin film.

### Comparative Example 6

A polyolefin-based resin film was obtained in the same manner as in Example 5, except that the ionic liquid was not used and the amount of the high-density polyethylene was changed to 97 parts by mass.

### Comparative Example 7

The kneading was performed under the same conditions as in Example 5, except that the polypropylene carbonate was not used and the amount of the high-density polyethylene was changed to 99 parts by mass. As a result, the ionic liquid was immiscible and a polyolefin-based resin composition was not obtained.

**Table 3**

| Example/ Comparative Example | Polyolefin-based Resin | | Polypropylene Carbonate | Ionic Liquid | | |
|---|---|---|---|---|---|---|
| | (Part) | | (Part) | (Part) | | |
| | HDPE | PP | PPC | BMI-TFSA | BMI-BF4 | Li-TFSA |
| Example 5 | 96 | 0 | 3 | 1 | 0 | 0 |
| Example 6 | 96 | 0 | 3 | 0 | 1 | 0 |
| Example 7 | 89 | 0 | 10 | 1 | 0 | 0 |
| Example 8 | 0 | 96 | 3 | 1 | 0 | 0 |
| Example 9 | 0 | 89 | 10 | 1 | 0 | 0 |
| Example 10 | 96 | 0 | 3 | 1 | 0 | 0 |
| Example 11 | 96 | 0 | 3 | 1 | 0 | 0 |
| Comparative Example 5 | 100 | 0 | 0 | 0 | 0 | 0 |
| Comparative Example 6 | 97 | 0 | 3 | 0 | 0 | 0 |
| Comparative Example 7 | 99 | 0 | 0 | 1 | 0 | 0 |

Table 3 shows the formulations of the polyolefin-based resin, the polyalkylene carbonate resin, and the ionic liquid in Examples 5 to 11 and Comparative Examples 5 to 7.

### Evaluation Method 2

### (1) Surface Resistivity

According to JIS K 6911:1995, the surface resistivity was measured using the measurement instrument below.

Measuring Instrument: Super Insulation Tester SM-8220 (Hioki E. E. Corporation)
Measurement Temperature: 23°C
Measurement Humidity: 50% Rh
Measurement Conditions: The measurement value was the resistivity upon application of 500 V for a minute.

**Table 4**

| Example/ Comparative Example | Surface Resistivity Ω/□ | | | |
|---|---|---|---|---|
| | Stretching Magnification | | | |
| | × 1 (Control) | × 1.5 | × 2 | × 9 |
| Example 5 | 1.0×10¹⁶ | 3.1×10¹⁴ | 1.3×10¹⁴ | 7.3×10¹² |
| Example 6 | 9.4×10¹⁶ | - | 2.0×10¹⁴ | 1.2×10¹³ |
| Example 7 | 1.5×10¹⁵ | - | 3.7×10¹⁴ | 2.2×10¹¹ |
| Example 8 | 4.8×10¹⁶ | - | 3.7×10¹⁴ | - |
| Example 9 | 4.8×10¹⁶ | - | 3.6×10¹² | - |
| Example 10 | 2.4×10¹⁶ | 1.6×10¹⁵ | 1.1×10¹⁴ | 3.1×10¹³ |
| Example 11 | 1.1×10¹⁶ | - | 3.4×10¹⁴ | 3.2×10¹² |
| Comparative Example 5 | 7.2×10¹⁶ | 2.6×10¹⁶ | 1.0×10¹⁶ | 7.7×10¹⁵ |
| Comparative Example 6 | 6.3×10¹⁶ | 9.2×10¹⁵ | 9.9×10¹⁵ | 7.8×1.0¹⁵ |
| Comparative Example 7 | - | - | - | - |

Table 4 shows the measurement results of surface resistivity of the polyolefin-based resin films having stretching magnifications of 1.5 times, 2 times, and 9 times, obtained in Examples 5 to 11 and Comparative Examples 5 and 6. Further, as a control, Table 4 also shows the measurement results of the surface resistivity of an unstretched polyolefin-based resin film (magnification × 1).

Fig. 1 shows the relationship between stretching magnification and surface resistivity with regard to the films obtained in Example 5 and Comparative Example 5.

It is shown that the surface resistivity was greatly decreased by the stretching in all of Examples 5 to 11 shown in Table 4. This reveals that antistatic performance is improved by the stretching of polyolefin-based resin film. Further, Examples 8 and 9 revealed that the effect of decreasing the surface resistivity by the stretching is obtained not only in polyethylene but also in polypropylene.

In contrast, as is clear from Comparative Example 5, the surface resistivity of a film formed only of a polyolefin-based resin hardly changed after the stretching, and the improvement in antistatic performance by the film stretching was not observed. Further, Comparative Examples 6 and 7 revealed that the improvement in antistatic performance by the film stretching was also not observed in films formed from a polyolefin-based resin composition that does not contain a polypropylene carbonate resin or an ionic liquid.

### Industrial Applicability

The polyolefin-based resin composition of the present invention ensures superior resilience in addition to the mechanical property of polyolefin-based resin, and therefore can be used more widely than the conventional polyolefin-based resin compositions that were limited in use due to low resilience. The polyolefin-based resin composition of the present invention is thus very useful.

The polyolefin-based resin composition of the present invention ensures superior antistatic performance in addition to retention of mechanical property and improvement in resilience. Therefore, in addition to conventional usages of polyolefin-based resin films, the polyolefin-based resin film of the present invention can also be used for, for example, wrapping materials for electronic materials etc., in which polyolefin-based resin film had only limited use because electrostatic discharge or adherence of dust must be avoided.

## Claims

1. A polyolefin-based resin composition, comprising a polyolefin-based resin, a polyalkylene carbonate resin, and an ionic liquid.

2. The polyolefin-based resin composition according to claim 1, wherein the polyalkylene carbonate resin is polypropylene carbonate.

3. The polyolefin-based resin composition according to claim 1 or 2, wherein the ionic liquid is a salt comprising a combination of a cation selected from the group consisting of ammonium ion, pyridinium ion, pyrrolidinium ion, pyrrolinium ion, oxazolium ion, oxazolinium ion, imidazolium ion, thiazolium ion and phosphonium ion, and an anion selected from the group consisting of halogen ions, phosphate ion, nitrate ion, sulfate ion, bisulfate ion, sulfonate ion, tosylate ion, perchlorate ion, aluminate ion, dialuminate ion, borate ion, amide ion, dicyanamide ion, succinate ion, thiocyanate ion, and carboxylate ion.

4. The polyolefin-based resin composition according to any one of claims 1 to 3, wherein the polyolefin-based resin composition comprises 0.05 to 20 parts by mass of polyalkylene carbonate resin, and 0.01 to 5 parts by mass of ionic liquid, per 100 parts by mass of polyolefin-based resin.

5. The polyolefin-based resin composition according to any one of claims 1 to 4, wherein the polyolefin-based resin is polypropylene or polyethylene.

6. The polyolefin-based resin composition according to any one of claims 1 to 4, wherein the polyolefin-based resin is polypropylene.

7. A molded article formed by molding the polyolefin-based resin composition according to any one of claims 1 to 6.

8. A polyolefin-based resin film formed by molding the polyolefin-based resin composition according to any one of claims 1 to 6, wherein the polyolefin-based resin film is stretched at least in a monoaxial direction.

9. The polyolefin-based resin film according to claim 8, wherein the stretching magnification when the polyolefin-based resin film is stretched in the monoaxial direction is 1.01 to 20.0.

## Patentansprüche

1. Eine Harzzusammensetzung auf Polyolefinbasis, umfassend ein Harz auf Polyolefinbasis, ein Polyalkylencarbonatharz und eine ionische Flüssigkeit.

2. Die Harzzusammensetzung auf Polyolefinbasis gemäß Anspruch 1, wobei das Polyalkylencarbonatharz Polypropylencarbonat ist.

3. Die Harzzusammensetzung auf Polyolefinbasis gemäß Anspruch 1 oder 2, wobei die ionische Flüssigkeit ein Salz ist, umfassend eine Kombination aus einem Kation ausgewählt aus der Gruppe bestehend aus Ammoniumion, Pyridiniumion, Pyrrolidiniumion, Pyrroliniumion, Oxazoliumion, Oxazoliniumion, Imidazoliumion, Thiazoliumion und Phosphoniumion, und einem Anion ausgewählt aus der Gruppe bestehend aus Halogenionen, Phosphation, Nitration, Sulfation, Bisulfation, Sulfonation, Tosylation, Perchloration, Alumination, Dialumination, Boration, Amidion, Dicyanamidion, Succination, Thiocyanation und Carboxylation.

4. Die Harzzusammensetzung auf Polyolefinbasis gemäß einem der Ansprüche 1 bis 3, wobei die Harzzusammensetzung auf Polyolefinbasis 0,05 bis 20 Massenteile an Polyalkylencarbonatharz und 0,01 bis 5 Massenteile an ionischer Flüssigkeit, pro 100 Massenteile des Harzes auf Polyolefinbasis umfasst.

5. Die Harzzusammensetzung auf Polyolefinbasis gemäß einem der Ansprüche 1 bis 4, wobei das Harz auf Polyolefinbasis Polypropylen oder Polyethylen ist.

6. Die Harzzusammensetzung auf Polyolefinbasis gemäß einem der Ansprüche 1 bis 4, wobei das Harz auf Polyolefinbasis Polypropylen ist.

7. Ein Formgegenstand, gebildet durch Formen der Harzzusammensetzung auf Polyolefinbasis gemäß einem der Ansprüche 1 bis 6.

8. Ein Harzfilm auf Polyolefinbasis, gebildet durch Formen der Harzzusammensetzung auf Polyolefinbasis gemäß einem der Ansprüche 1 bis 6, wobei der Harzfilm auf Polyolefinbasis mindestens in eine monoaxiale Richtung gereckt ist.

9. Der Harzfilm auf Polyolefinbasis gemäß Anspruch 8, wobei die Streckvergrößerung, wenn der Harzfilm auf Polyolefinbasis in die monoaxiale Richtung gereckt ist, 1,01 bis 20,0 beträgt.

## Revendications

1. Composition de résine à base de polyoléfine, comprenant une résine à base de polyoléfine, une résine de carbonate de polyalkylène, et un liquide ionique.

2. Composition de résine à base de polyoléfine selon la revendication 1, dans laquelle la résine de carbonate de polyalkylène est du carbonate de polypropylène.

3. Composition de résine à base de polyoléfine selon la revendication 1 ou 2, dans laquelle le liquide ionique est un sel comprenant une combinaison d'un cation choisi parmi le groupe constitué d'ion ammonium, d'ion pyridinium, d'ion pyrrolidinium, d'ion pyrrolinium, d'ion oxazolium, d'ion oxazolinium, d'ion imidazolium, d'ion thiazolium et d'ion phosphonium, et d'un anion choisi parmi le groupe constitué d'ions halogène, d'ion phosphate, d'ion nitrate, d'ion sulfate, d'ion bisulfate, d'ion sulfonate, d'ion tosylate, d'ion perchlorate, d'ion aluminate, d'ion dialuminate, d'ion borate, d'ion amide, d'ion dicyanamide, d'ion succinate, d'ion thiocyanate et d'ion carboxylate.

4. Composition de résine à base de polyoléfine selon l'une quelconque des revendications 1 à 3, dans laquelle la composition de résine à base de polyoléfine comprend de 0,05 à 20 parties en masse de résine de carbonate de polyalkylène, et de 0,01 à 5 parties en masse de liquide ionique, pour 100 parties en masse de résine à base de polyoléfine.

5. Composition de résine à base de polyoléfine selon l'une quelconque des revendications 1 à 4, dans laquelle la résine à base de polyoléfine est du polypropylène ou du polyéthylène.

6. Composition de résine à base de polyoléfine selon l'une quelconque des revendications 1 à 4, dans laquelle la résine à base de polyoléfine est du polypropylène.

7. Article moulé formé par moulage de la composition de résine à base de polyoléfine selon l'une quelconque des revendications 1 à 6.

8. Film de résine à base de polyoléfine formé par moulage de la composition de résine à base de polyoléfine selon l'une quelconque des revendications 1 à 6, dans lequel le film de résine à base de polyoléfine est étiré au moins dans une direction monoaxiale.

9. Film de résine à base de polyoléfine selon la revendication 8, dans lequel le grandissement dû à l'étirage lorsque le film de résine à base de polyoléfine est étiré dans la direction monoaxiale est de 1,01 à 20,0.
